# EUROPEAN PATENT SPECIFICATION

(11) **EP 4 312 530 B1**
(45) Date of publication and mention of the grant of the patent: **29.07.2026**
(21) Application number: 22715539.7
(22) Date of filing: 29.03.2022
(51) Int. Cl.: A01K 73/045, B63B 21/66, G01V 1/38

(54) **TRAWL DOOR WITH MOVEABLE HYDROFOIL SECTIONS**
SCHLEPPNETZTÜR MIT BEWEGLICHEN TRAGFLÜGELTEILEN
PANNEAU DE CHALUT AVEC SECTIONS D'HYDROPTÈRE MOBILES

(30) Priority: 30.03.2021 DK PA202170153; 08.04.2021 DK PA202170165; 05.07.2021 DK PA202170355
(43) Date of publication of application: 07.02.2024
(73) Proprietor: Thyborøn Skibssmedie A/S, 7680 Thyborøn (DK)
(72) Inventor: ANDREASEN, Peder Stausholm, 7680 Thyborøn (DK); FRUMKIN, Jacob, 7680 Thyborøn (DK)
(74) Representative: Patrade A/S
(86) International application number: PCT/DK2022/050067
(87) International publication number: WO 2022/207052

(56) References cited:
- WO-A1-2019/168408
- WO-A1-2020/254896

## Description

### Field of the Invention

The present invention is directed to a spreading device for trawl fishing, seismic survey operations or other water activities where it is desirable to keep distance between two sides of a towed device. In connection with trawl fishing the two sides shall be understood as the two lateral connection points for the trawl in order to maintain the trawl mouth open in order to catch fish. For seismic use it is important to spread for example an array of sensors/microphones as much as possible in order to monitor an as large an area as possible.

In the following, spreading device will often be referred to as "trawl door", however it shall be understood that trawl door is a spreading device, and that the inventive concept of the present invention is applicable on other devices.

This desire to provide spreading force shall also be evaluated in view of the drag/resistance and speed through the water the spreading device exerts on the ship pulling the towed device.

A number of parameters determine the mode of operation and capability of a trawl door when being towed through the water.

The spreading force, which is the lateral force (lift force) exerted by a trawl door for spreading the mouth of the trawl net, is greater the larger the area of the trawl door as seen from the side. There are examples of trawl doors where the area of the trawl door can be adjusted manually. GB 1 405 076 discloses a flat trawl door where the length is greater than the width, and where a displaceable plate element can be made to expose and cover, respectively, an opening at the centre of the trawl door. Another example is seen in SU 1 746 970 A1, disclosing a cambered, but not V-shaped trawl door where two openings in upper and lower half, respectively, of the door can be exposed or covered by a displaceable plate element. A similar feature is shown in WO 86/02525 in a trawl door which is V-shaped but not cambered, and where the length is greater than the width.

The position in the water of trawl doors also determines how deep the trawl net is situated in the water body. In order to catch schools of fish at different depths in the water body, it is thus necessary for the trawl doors to assume different depths in the water. This adjustment of the course of the trawl doors in water can be provided by fastening the towing wires and chains for trawler and trawl net, respectively, in various ways on the trawl doors.

### Background of the Invention

WO 2010/019049 A1 discloses a cambered trawl door with an H:B ratio greater than 1 and which is formed symmetrically about a centre plane, which is horizontal in situation of use, as an upper part and a lower part of the trawl door extend in opposite directions from the centre plane. The upper and lower parts are each provided with an opening close to the upper and lower edges of the trawl door, and at some distance from the leading edge and trailing edge of the trawl door. Respective plate elements are arranged at the openings such that the plate elements can cover or expose openings by vertical displacement towards and away from the centre plane, respectively. The upper and lower parts are connected by a longitudinal central tube section that contains a drive mechanism. The plate elements are individually displaced by screw spindles that are mechanically connected to the drive mechanism. By the individual displacement of the plate elements, the active hydrodynamic area of the upper and lower parts, respectively, be adjusted, causing the vertical position of the trawl door in water to be changed. Use of a central mechanical drive mechanism in a tube section as a connecting constructional part means that the design is somewhat heavier than other known trawl doors with the same main features, a fact influencing the capability of the trawl door in a disadvantageous way.

WO 2019/168408 disclose A trawl door forming a height and a length. The trawl door comprising several curved and overlapping plates including a leading piste which extend in the height direction. The trawl door forms a towing face comprising a towing bracket and an opposite trawl face comprising a bridle bracket. The trawl door comprises at least one regulation means (2) for adjusting a leading surface of the trawl door said regulation means comprises at least one through opening or at least one cut out, a hatch displaceable in the length direction and a hatch actuator (24), where the hatch covers the through opening or the cut out when the hatch is in a closed position, and the regulation means is positioned on the towing face of the leading piste.

Various devices and arrangements for remotely controlling the lateral positions of trawl doors or deflectors are known. Examples of the prior art are disclosed in WO 98/24685, WO 2005/055708, WO 2004/086092 and WO 2010/019049.

GB 2122562 discloses a spreading device in the form of a paravane or pelagic trawl door with an arrangement for remote control. The angle of attack of the paravane can be changed by moving a bridle head containing the attachment point for the towing line. Three bridle legs connect the bridle head with the body of the paravane. The point where rear bridle leg is connected to the body of the paravane is movable in horizontal direction when operated at sea by a screw spindle of an electric motor. This prior art arrangement is only capable of changing the angular position of the paravane about a vertical axis when used as a spreading device, thereby changing the lateral position of the spreading device relative to the direction of movement in the water. Also, the bridle arrangement is cumbersome and vulnerable when handling on a fishing trawler at sea, where the attachment point is provided close to the body of the spreading device, especially in case of trawl doors used for trawl fishing.

A further example of a spreading device is described in GB2492652. This spreading device is substantially an "underwater wing"-profile. The profile is provided with flaps along a trailing part of the device, such that by pivoting the flaps, the spreading device movement through the water may be controlled. The construction is based on a principle different from normal spreading devices used for, for example trawl fishing, where a number of foils arranged with a certain overlap creates channels through which the water is guided as the device is being towed through the water. This water creates lift (spreading force) whereas the wing profile according to GB2492652 provides the lift for this device.

In the art it is known to provide trawl doors with a number of foils. In a cross-sectional design the foils are comparable to air foils, and as such will direct the fluid streaming across the surfaces in a determined manner. Also, the foils are able to create lift, thereby increasing the lift force - or spreading force for trawl doors travelling through the water.

As there are many parameters influencing the spreading force of a trawl door, it is desirable to also be able to adjust the spreading force, and preferably during use. Some of the parameters influencing the spreading force of a given trawl door may be the waters' temperature, salinity, trawling depth, size of trawl, speed of trawl through the water, side current and many other factors.

Some prior art examples of such control are disclosed in WO2020/254896, WO2018/108222, WO2010/019049, WO2015/055207, WO2013/014507.

These prior art examples all have some drawbacks. Some of them are not foreseen as being remotely controlled whereby it is not possible to adjust the trawl door's characteristics during use, whereas others only allow for very simple adjustment.

### Object of the Invention

Consequently, it is the object of the present invention to provide a much more versatile and easier manner in which to control a trawl door.

### Description of the Invention

The present invention is defined in claim 1 and addresses this by providing
A spreading device for trawl fishing, seismic survey operations or other water activities where it is desirable to keep distance between two sides of a towed device, said spreading device having at least one part, which at least one part comprises two or more foils, where said foils in use are arranged such that a first foil is arranged foremost in the intended travelling direction of the spreading device, and a last foil is arranged rearmost with respect to the intended travelling direction, and where foils having one or more moveable sections are arranged on one or both sides of a stationary foil, where each foil has a front surface and a rear surface, said surfaces each being defined by two edges and two side limitations, in use being front and rear edges (leading or trailing edges), an upper and lower side limitations where said upper and lower side limitations of the two or more foils are connected to respective upper and lower frames, where an axis is defined passing through the leading edge of the first foil and the trailing edge of the last foil, and where the first foil overlaps or at least overlaps a part of all other foils, and where a second foil overlaps the last foil, where the overlap of the first foil relative to the second foil is between 50% and 90% measured along the axis and where the overlap of the second foil relative to the last foil is between 30% and 90% measured along the axis where at least one foil is stationary and where one or more sections of a foil is pivotably connected to said foil comprising sections, such that the one or more sections may be moved from a position where the surface of any section is flush with the surface of said foil comprising sections, to a position where the surface is out of plane with the surface of said foil comprising sections.

The foils may be equipped or designed with a bulb which in itself improves the spreading force - see also applicants own prior patent application WO2018/054443.

The particular feature of having one or more sections of a foil being pivotable relative to the remainder of that foil and particularly with respect to an adjacent foil is unique in that it does provide a number of effects to the spreading devices as such. Whereas with the prior art devices as mentioned above, most of them will change the affected area of a foil. The present invention changes the water flow impacting the spreading device, and in particular only a section of the spreading device. Consequently, by moving a section of one foil the remaining part of that particular foil, wherein the section is integrated, will have its normal function such as for example stabilizing the entire spreading device, but at the same time the hydrodynamic probabilities of this spreading device have changed. Depending on the direction in which this section is pivotable relative to the "neutral position" in which the surface of the section is substantially flush with the surface of the surrounding foil, the waterflow characteristics between the two adjacent foils, one of them being stationary the other one having a movable section, will be changed such that the drag resistance may be altered as well as the lift provided by that particular spreading device.

The further feature of the foils overlapping creates well defined channels for the water to travel through during use. By the design of the foils and their arrangement with overlap, the passing water is accelerated through the channels, thereby creating increased lift.

In a further advantageous embodiment of the invention the section is pivotably connected to said foil comprising sections along the front edge, the rear edge or a pivot axis arranged between said front and rear edges.

The variation in the position of the pivot axis relative to the front respective rear sides of the spreading device (for example seen in the direction of travel) has a large effect on the impact of the section's deflection relative to the foil in which the pivotable section is arranged. Consequently, it is possible to design spreading devices where the deflection of the foil will have a great impact on one characteristic, for example the hydrodynamic drag or/and the hydrodynamic lift i.e., the spreading force created by the spreading device.

In a still further advantageous embodiment of the invention, the section may be pivoted out of the plane of the second foil to such a degree that the section comes into contact with an adjacent foil or any deflection there in between. With this embodiment it becomes possible to more or less block part of a section for throughflow of water and as such completely change the constitution of the spreading device relative to the characteristics had the section been in the position where it is substantially flush with the surrounding foil and thereby having no deflection at all.

In a still further advantageous embodiment of the invention, the spreading device comprises three or more foils and where foils having a movable section are arranged on either side of a stationary foil. With this arrangement it becomes possible to substantially completely redesign and reconfigure the waterflow passing the stationary hydrofoil in that by having a section on foils on both sides of a stationary middle foil, the dynamics may be changed altogether.

This is particularly outspoken in a further embodiment of the invention, where the section may be pivoted either above or below said upper surface of said another foil or both above and below said upper surface of said another foil. With this embodiment it becomes possible to either deflect the section towards the stationary foil or away from the stationary foil. As the section at least for a part of the foil into which it is incorporated, determines the hydrodynamic properties of the foil itself and the channel which is created by the stationary foil and the foil incorporating a section. The ability of the foil to move in either direction, i.e. below or above set surface of the foil into which it is integrated creates possibilities for influencing the hydrodynamic capabilities of the spreading device. For example, in embodiments of the invention where a stationary foil is arranged between two foils having movable sections it is possible to control the sections such that for example one section has a negative deflection and another section integrated in a foil opposite to the stationary foil has a positive deflection, whereby both foil sections will come into contact with the central foil. The other possibility is also that both foils are moved such that they are furthest away from the centrally arranged stationary foil and in this manner the characteristics of a spreading device will be able to be designed for a wide range of applications given a wide range of spreading characteristics.

In a further embodiment of the invention it is possible to move the movable sections on a top part of a trawl door, in a different direction to the movable sections on the bottom part of the trawl door. In this manner, the hydrodynamic characteristics of the top part of a trawl door are changed in relation to the bottom part, thereby facilitating steering.

Preferably, the movable section constitutes between 20% and 80%, more preferred 30% to 60% and most preferred approx. 40% of the surface area of said foil.

Typically, sections in the same spreading device will have the same extent in order to assure symmetry such that the hydrodynamic stability of the entire spreading device is assured, but it is also contemplated that in spreading devices having a multitude of foils, the sections may have different extends on different foils. In this matter it becomes possible to both create variations in the spreading force but also to control the depths, the drag and compensate for unevenness's, for example in a trawl or side currents etc. Furthermore, depending on the type of fishing which is taking place, the sections may be small or large, relative to the entire surfaces of the foil integrating the section, such that the adjustment possibilities are designed to that particular type of fishing. For example, in waterbodies where there are only small or negligible variations in for example current, salinity etc. the stability of the foils does not need to be adjustable as much as when fishing in waters, where great variations or even layers of different water are present, whereby it is necessary to control the spreading devices in order to achieve, at all times, the optimum spreading angle in order, for example, for the trawl mouth to be as open as possible. In order to control the deflection angle of the section, i.e. to control how much the section will be out of plane with the foil in which it is integrated, a further embodiment of the invention provides that the pivot action of the section is controlled by either:
a. manually positioning and locking the section into position relative to the upper surface of said another foil before introducing the spreading device into the water, or
b. activation of an actuator arranged between the section and an adjacent foil, or
c. remotely controlling an actuator arranged between the section and an adjacent foil.

In the optional embodiment where the section positions are decided/selected by manual means, it may, for example, be a piston which is manually pumped into a fixed position prior to the spreading device being lowered into the ocean. In many circumstances, the experienced crew or operators will from experience know the optimum deflection angle of the section such that according to the location in which the spreading devices are to be used the sections may be pre-arranged in the optimum position. In other instances, it may be advantageous to activate an actuator, for example by activating an automatic pump in order to move and lock the section(s) in the desired relative position. However, the most desirable embodiment is where it is possible to remotely control the actuator as such that during the fishing operation when or if it is detected that the spreading characteristics of one or both spreading devices need to be altered in order to carry out the optimum fishing procedure, this may be carried out from the vessel towing the spreading device and as such it is not necessary to stop the fishing procedure in order to readjust the deflection angle of the sections of the spreading devices.

The actuators are typically mounted between the sections and the adjacent foil in that although the side limitations in each part may be more stable and stronger, it will severely limit the possible position of the section. For practical purposes it is desired to be relatively independent as to the position of the section relative to the entire foil and as such by arranging the actuator between the stationary adjacent foil and the section, the position of the section is completely free in each part.

In a further advantageous embodiment, the one or more sections are positioned on a foil such that the section may be moved from a position where the section is substantially flush, namely only extends a material thickness of the movable section from the plane of the foil to a position out of plane with said foil.

In this embodiment the movable section is an additional plate member shaped to the curvature of the foil where it is to be positioned. When the section is in its "closed" position, i.e. substantially flush with the foil, the section will only extend above the foil corresponding to the thickness of the plate material from which the foil is manufactured. The actuator (not illustrated with reference to this embodiment) may be arranged on an adjacent foil such that an aperture is provided for the actuators activating arm to be able to operate the movable section. In the position where the section/plate is in its closed position, i.e. substantially flush with the foil, it will have no or only minimal influence on the hydrodynamic characteristics of the foil.

In modern fishery, spreading devices having a relatively high extent relative to the width in the new situation are usually used. The spreading devices typically comprise two or more parts which are arranged on top of each other and connected by the side limitations or share a common side limitation. Furthermore, by angling two parts relative to each other, a more stable spreading device is obtained, and of course it will be possible to add the advantages of the sections according to the present invention and as discussed above, into a spreading device, thereby achieving the additional advantages of the present invention.

### Description of the Drawing

The invention will now be described with reference to the accompanying drawings:
Figure 1 illustrates a spreading device in the shape of a trawl door;
Figures 2 and 3 illustrate a cross-section through a trawl door, the cross-section depicting a position where the movable section is installed;
Figure 4 illustrates a trawl door seen from a position where it is clear that the third foil is subdivided such that the section is free to pivot about an axis by activating the actuator;
Figure 5 illustrates a trawl door having two parts, where each part is limited by a frame;
Figure 6 illustrates that the sections may be constructed such that the pivot axis may be on the trailing edge or the leading edge of the trawl door;
Figure 7 illustrates an embodiment where the section pivots around an axis provided between the leading and the trailing edges;
Figure 8 illustrates an embodiment where the section is mounted on a foil.

### Detailed Description of the Invention

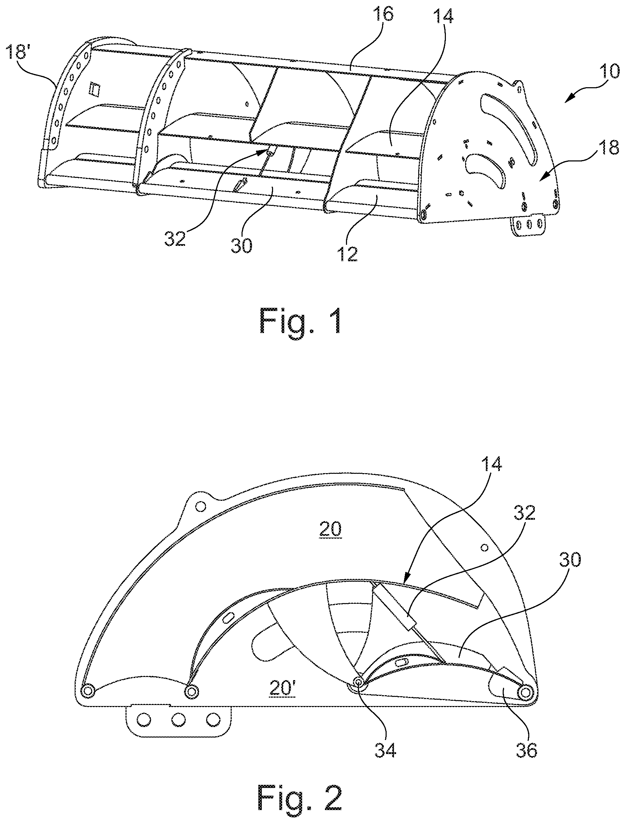

In Figure 1 is illustrated a spreading device in the shape of a trawl door 10. In the illustration, the trawl door 10 is seen from the rear, understood such that in use, the water will exit through the various channels 20, 20' and flow between the foils 12, 14, 16. As illustrated, the trawl door 10 comprises three foils 12, 14, 16 which guide the water as the trawl door 10 is being pulled through the water. During the passage of water in the channels 20, 20', the foils 12, 14, 16 will be influenced by the passing water and thereby create a spreading force which is used, for example, to keep the trawl mouth open in order to catch fish.

The design of the channels 20, 20' is very important in that it is the design of these channels which decides the properties of the trawl door as it is being pulled through the water. Therefore, by being able to alter the shape of the channels, this will influence the spreading force and the drag force of the trawl door.

To this end, the present invention provides a section of a foil which is adjustable such that the characteristics of the entire trawl door may be altered. The section 30 is in this embodiment pivotably mounted on an axis concentric with a leading edge of the third foil 12. An actuator 32 is arranged between the section 30 and the second foil 14 which is stationary, such that by activating the actuator 32, the section 30 may be pivoted about the axis.

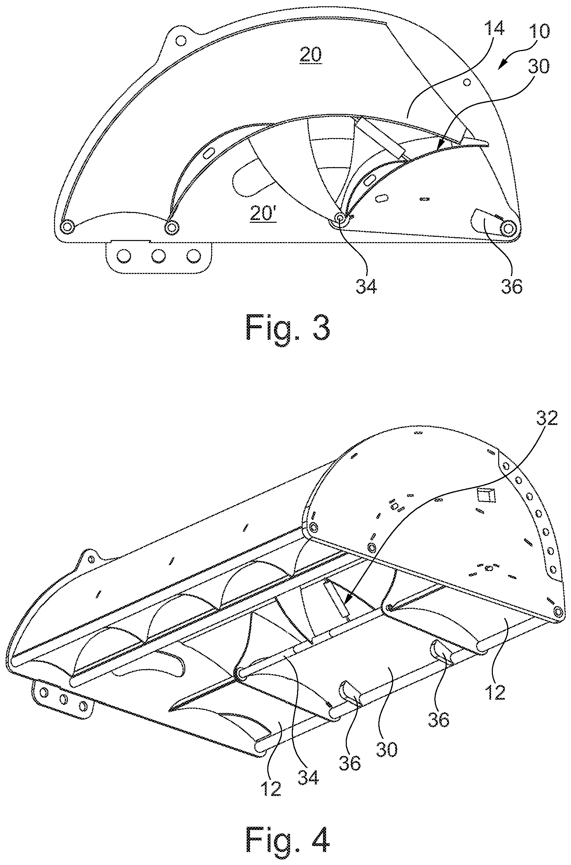

Turning to Figures 2 and 3, this movement will be further explained. Figures 2 and 3 illustrate a cross-section through a trawl door 10 in a position where the movable section is installed. In Figure 2 it is clear that the movable section 30 is in a position where the shape of the section 30 is flush with the remaining part of the foil 12 (not shown). The actuator 32 is arranged between the section 30 and the second foil 14. As the second foil 14 is stationary and fixedly mounted to the frames 18, 18' (see Figure 1) arranged in either end of the trawl door 10, the second foil constitutes a fixed, non-movable attachment point for the actuator 32. The section, on the other hand, is pivotably mounted on an axis 34, such that when the actuator is in the extended position as illustrated with reference to Figure 2, the section is resting on a bearing 36, whereby the section 30 is flush with the remaining part of the foil 12. As the actuator 32 is activated, as illustrated with reference to Figure 3, the section 30 is pivoted about the axis 34 into a position where the section is not flush with the remaining part of the foil 12. In the illustrated example in Figure 3, the section 30 has been pivoted such that the section 30 is in contact with the second foil 14. It is clear that in the example illustrated in Figure 3, the channel 20' has been drastically changed in that the section 30 as illustrated in Figure 3 will block most of the flow of water through the channel in the extent of the section.

Turning to Figure 4, the trawl door 10 is seen from a position where it is clear that the third foil 12 is subdivided such that the section 30 is free to pivot about the axis 34 by activating the actuator 32. In the illustrated embodiment, the section 30 is resting on the support 36 such that the position of the section is comparable to the example described above with reference to Figure 2. It is clear that with this configuration, only the section 30 will be pivoted out of its position flush with the remaining foil 12, and as such it will only be the section 30 which has influence on the water flow through the trawl door, whereas the water flowing through the trawl door in the parts of the trawl door having the fixed foils 12 will not be severely influenced.

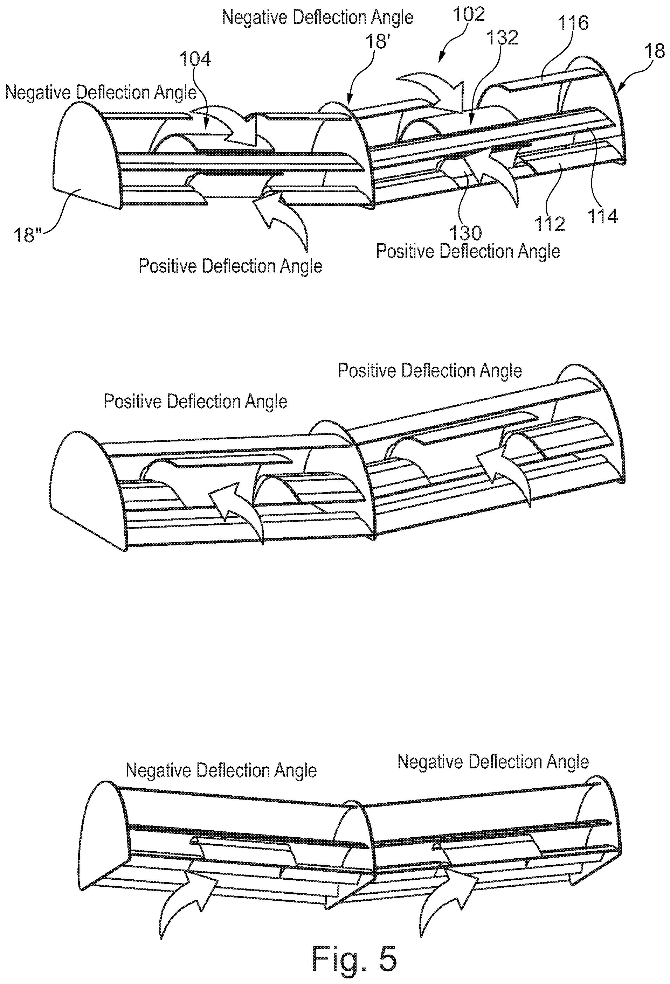

With the embodiment described above with reference to particularly Figures 2 and 3, the section has been pivoted, creating a positive deflection angle. It is, however, also foreseen that the section may be pivoted with a negative deflection angle, as will be explained with reference to Figure 5. In Figure 5 is illustrated a trawl door having two parts 102, 104, where each part is limited by a frame 18, 18', 18". In this embodiment, the two parts share the middle frame 18'. Each part is identical and comprises three foils 112, 114, 116. In this embodiment, the central foil 114 is stationary in its entire length, whereas the upper and lower foils 116, 112 are provided with movable sections 130, 132. The sections are each pivotably mounted around an axis concentric with the leading edges of the foils 112, 116. The upper section 132 is provided with a negative deflection angle, whereas the lower section 130 is provided with a positive deflection angle. The movement of the sections 130, 132 may be achieved as described above by mounting actuators between the central foil 114 and the movable sections 130, 132 respectively.

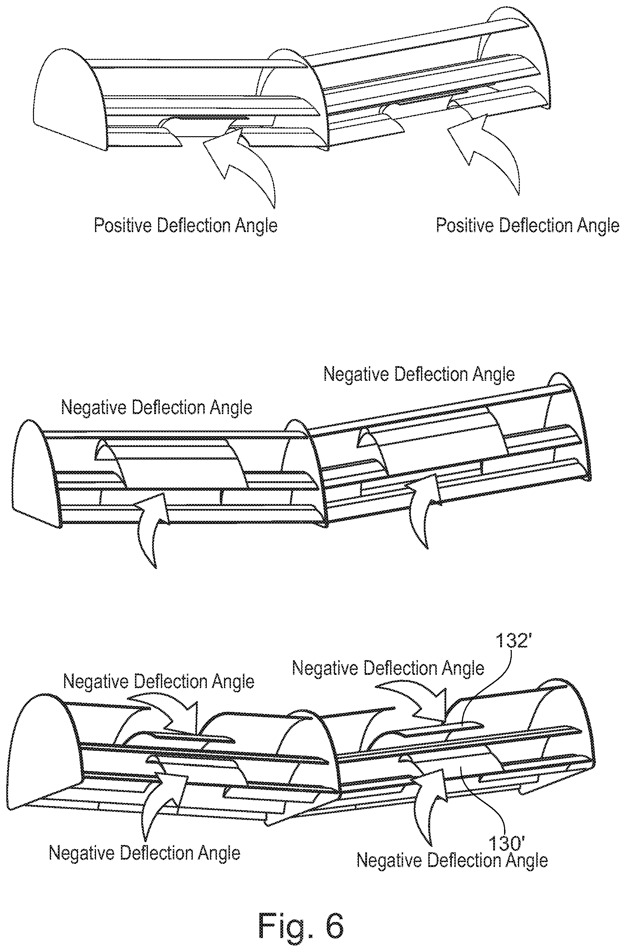

As illustrated in Figure 6, the sections 130', 132' may be constructed such that the pivot axis 34 may be on the trailing edge or the leading edge of the trawl door. However, common for all embodiments is the fact that the actuator is mounted on a stationary foil and connected to the section which is pivotably mounted either to the leading or trailing edge or in-between of an adjacent foil.

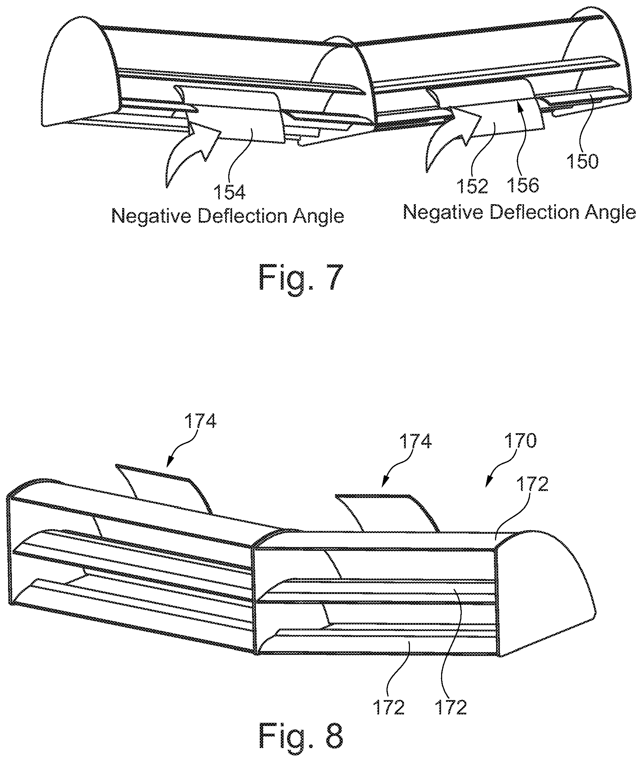

**In** fig. 7, for example the sections 152,154 are pivotably mounted on axis 156, substantially in the middle of the foil 150, such that when the actuator (not shown) is activated part of the section will be brought above the plane of the foil, while another part will be pivoted below the plane of the foil.

**In** fig. 8 is illustrated a further embodiment where a spreading device 170 comprising a number of traditional foils 172, is fitted with a section 174, which may be manipulated by an actuator (not illustrated) from a position where the section is substantially flush with the foil 172'. For this purpose, the section 174 is designed with a curvature corresponding to the curvature of the foil 172'. The actuator (not illustrated) may move the section 174 into the illustrated position not flush with the foil 172', whereby the section will influence the hydrodynamic characteristics of the entire foil 170.

**In** this embodiment the section 174 is arranged on the outermost foil 172', but naturally the section 174 may be arranged on any of the foils. Also the section 174 may be arranged for the opposite movement. When the section174 is arranged on the "inside" for example between two adjacent foils 172,172' it will be possible to influence the hydrodynamic characteristics of the entire foil 170 by altering the water flow between adjacent foils.

Therefore, by manipulating the actuators, the sections may be moved from positions where the sections are flush with the foil into or onto which they are mounted to a position where the section is not flush with the foil, whereby the section will influence the hydrodynamic characteristics of the trawl door as described above. For other spreading device constructions having a plurality of foils it is clear that the invention finds use where at least one foil is stationary, in order to form a fixed land for the actuator. Consequently, the actual number of foils is not relevant.

In a further advantageous embodiment, the one or more sections are positioned on a foil such that the section may be moved from a position where the section is substantially flush, namely only extends a material thickness of the movable section from the plane of the foil to a position out of plane with said foil.

In this embodiment the movable section is an additional plate member shaped to the curvature of the foil where it is to be positioned. When the section is in its "closed" position, i.e. substantially flush with the foil, the section will only extend above the foil corresponding to the thickness of the plate material from which the foil is manufactured. The actuator (not illustrated with reference to this embodiment) may be arranged on an adjacent foil such that an aperture is provided for the actuators activating arm to be able to operate the movable section. In the position where the section/plate is in its closed position, i.e. substantially flush with the foil, it will have no or only minimal influence on the hydrodynamic characteristics of the foil.

## Claims

1. A spreading device (10) for trawl fishing, seismic survey operations or other water activities where it is desirable to keep distance between two sides of a towed device, said spreading device (10) having at least one part, which at least one part comprises three or more foils (12,14,16), where said foils in use are arranged such that a first foil (16) is arranged foremost in the intended travelling direction of the spreading device, and a rearmost foil is arranged rearmost with respect to the intended travelling direction, where the three or more foils comprise at least one stationary foil and at least one foil with movable sections, and where one or more foils having one or more moveable sections (30) are arranged on one or both sides of a stationary foil, where each foil has a front surface and a rear surface, said surfaces each being defined by two edges and two side limitations, in use being front and rear edges (leading or trailing edges), an upper and lower side limitations where said upper and lower side limitations of the three or more foils are connected to respective upper and lower frames, where at least one foil is stationary and where one or more sections of a foil is pivotably connected to said foil comprising one or more sections, such that the one or more sections may be moved from a position where the surface of any section is flush with the surface of said foil comprising sections, to a position where the surface is out of plane with the surface of said foil comprising sections, said spreading device being **characterized in that** an axis is defined passing through the leading edge of the first foil and the trailing edge of the rearmost foil, and where the first foil overlaps or at least overlaps a part of all other foils along the axis, and where a second foil overlaps the rearmost foil along the axis, where the overlap of the first foil relative to the second foil is between 50% and 90% measured along the axis and where the overlap of the second foil relative to the rearmost foil is between 30% and 90% measured along the axis

2. Spreading device according to claim 1, wherein the one or more sections (30) is/ are pivotably connected to said foil comprising sections along the front edge, the rear edge or a pivot axis arranged between said front and rear edges.

3. Spreading device according to claim 1 wherein the one or more sections (30) are pivotable out of the plane of the second foil to such a degree that the section or sections comes into contact with an adjacent foil or any deflection there in between.

4. Spreading device according to claim 1 wherein the spreading device comprises three or more foils and where foils having one or more moveable sections are arranged on either side of a stationary foil.

5. Spreading device according to claim 1 wherein the one or more section may be pivoted either above or below said upper surface of said foil comprising sections or both above and below said upper surface of said foil comprising sections.

6. Spreading device according to claim 1 wherein the section constitutes between 20% and 80%, preferably 30% to 60% and most preferred approx. 40% of the surface area of said foil.

7. Spreading device according to claim 1 wherein the pivot action of the one or more sections is controlled by either:
a. manually positioning and locking said section into a desired position relative to the upper surface of said foil comprising sections before introducing the spreading device into the water, or
b. activation of an actuator arranged between the section and an adjacent foil, or
c. remotely controlling an actuator arranged between the section and an adjacent foil

8. Spreading device according to any preceding claim where the spreading device comprises more than one part, where two adjacent parts are connected by a common side limitation, and where the parts may optionally be angled relative to each other.

9. Spreading device according to claim 1 wherein the one or more sections are positioned on a foil such that the section may be moved from a position where the section is substantially flush, namely only extends a material thickness of the movable section from the plane of the foil to a position out of plane with said foil.

## Patentansprüche

1. Spreizvorrichtung (10) für Schleppnetzfischerei, seismische Vermessungsarbeiten oder andere Wasseraktivitäten, bei denen es wünschenswert ist, einen Abstand zwischen zwei Seiten einer geschleppten Vorrichtung zu halten, wobei die Spreizvorrichtung (10) mindestens einen Teil aufweist, wobei der mindestens eine Teil drei oder mehr Tragflächen (12,14,16) umfasst, wobei die Tragflächen im Gebrauch so angeordnet sind, dass eine erste Tragfläche (16) in der beabsichtigten Fahrtrichtung der Spreizvorrichtung vorderst angeordnet ist, und eine hinterste Tragfläche in Bezug auf die beabsichtigte Fahrtrichtung hinterst angeordnet ist, wobei die drei oder mehr Tragflächen mindestens eine stationäre Tragfläche und mindestens eine Tragfläche mit bewegbaren Abschnitten umfassen, und wobei eine oder mehrere Tragflächen, die einen oder mehrere bewegbare Abschnitte (30) aufweisen, auf einer oder beiden Seiten einer stationären Tragfläche angeordnet sind, wobei jede Tragfläche eine Vorderfläche und eine Rückfläche aufweist, wobei die Flächen jeweils durch zwei Kanten und zwei Seitenbegrenzungen definiert sind, die im Gebrauch Vorder- und Hinterkanten (Vorderkanten oder Hinterkanten), eine obere und untere Seitenbegrenzungen sind, wobei die obere und untere Seitenbegrenzungen der drei oder mehr Tragflächen mit jeweiligen oberen und unteren Rahmen verbunden sind, wobei mindestens eine Tragfläche stationär ist und wobei ein oder mehrere Abschnitte einer Tragfläche schwenkbar verbunden sind mit der Tragfläche, die einen oder mehrere Abschnitte umfasst, so dass der eine oder die mehreren Abschnitte von einer Position, in der die Fläche eines beliebigen Abschnitts bündig mit der Fläche der Tragfläche ist, die Abschnitte umfasst, in eine Position bewegt werden können, in der die Fläche aus der Ebene mit der Fläche der Tragfläche ist, die Abschnitte umfasst, wobei die Spreizvorrichtung **dadurch gekennzeichnet ist, dass** eine Achse definiert ist, die durch die Vorderkante der ersten Tragfläche und die Hinterkante der hintersten Tragfläche verläuft, und wobei die erste Tragfläche alle anderen Tragflächen entlang der Achse überlappt oder zumindest einen Teil aller anderen Tragflächen entlang der Achse überlappt, und wobei eine zweite Tragfläche die hinterste Tragfläche entlang der Achse überlappt, wobei die Überlappung der ersten Tragfläche relativ zur zweiten Tragfläche zwischen 50 % und 90 % gemessen entlang der Achse beträgt und wobei die Überlappung der zweiten Tragfläche relativ zur hintersten Tragfläche zwischen 30 % und 90 % gemessen entlang der Achse beträgt.

2. Spreizvorrichtung nach Anspruch 1, wobei der eine oder die mehreren Abschnitte (30) schwenkbar verbunden ist/sind mit der Tragfläche, die Abschnitte umfasst, entlang der Vorderkante, der Hinterkante oder einer Schwenkachse, die zwischen der Vorderkante und der Hinterkante angeordnet ist.

3. Spreizvorrichtung nach Anspruch 1, wobei der eine oder die mehreren Abschnitte (30) aus der Ebene der zweiten Tragfläche in einem solchen Maße schwenkbar sind, dass der Abschnitt oder die Abschnitte in Kontakt mit einer benachbarten Tragfläche oder einer beliebigen Auslenkung dazwischen kommt/kommen.

4. Spreizvorrichtung nach Anspruch 1, wobei die Spreizvorrichtung drei oder mehr Tragflächen umfasst und wobei Tragflächen, die einen oder mehrere bewegbare Abschnitte aufweisen, auf beiden Seiten einer stationären Tragfläche angeordnet sind.

5. Spreizvorrichtung nach Anspruch 1, wobei der eine oder die mehreren Abschnitte entweder oberhalb oder unterhalb der Oberseite der Tragfläche, die Abschnitte umfasst, oder sowohl oberhalb als auch unterhalb der Oberseite der Tragfläche, die Abschnitte umfasst, geschwenkt werden können.

6. Spreizvorrichtung nach Anspruch 1, wobei der Abschnitt zwischen 20 % und 80 %, vorzugsweise 30 % bis 60 % und besonders bevorzugt ca. 40 % des Flächeninhalts der Tragfläche ausmacht.

7. Spreizvorrichtung nach Anspruch 1, wobei die Schwenkbewegung des einen oder der mehreren Abschnitte gesteuert wird durch entweder:
a. manuelles Positionieren und Arretieren des Abschnitts in einer gewünschten Position relativ zur Oberseite der Tragfläche, die Abschnitte umfasst, bevor die Spreizvorrichtung in das Wasser eingebracht wird, oder
b. Betätigung eines Aktuators, der zwischen dem Abschnitt und einer benachbarten Tragfläche angeordnet ist, oder
c. Fernsteuern eines Aktuators, der zwischen dem Abschnitt und einer benachbarten Tragfläche angeordnet ist

8. Spreizvorrichtung nach einem der vorhergehenden Ansprüche, wobei die Spreizvorrichtung mehr als einen Teil umfasst, wobei zwei benachbarte Teile durch eine gemeinsame Seitenbegrenzung verbunden sind, und wobei die Teile optional relativ zueinander abgewinkelt sein können.

9. Spreizvorrichtung nach Anspruch 1, wobei der eine oder die mehreren Abschnitte auf einer Tragfläche so positioniert sind, dass der Abschnitt von einer Position, in der der Abschnitt im Wesentlichen bündig ist, nämlich nur eine Materialdicke des bewegbaren Abschnitts aus der Ebene der Tragfläche herausragt, in eine Position aus der Ebene mit der Tragfläche bewegt werden kann.

## Revendications

1. Dispositif (10) d'étalement pour le chalutage, des opérations de prospection sismiques ou d'autres activités nautiques où il est souhaitable de maintenir une distance entre deux côtés d'un dispositif tracté, ledit dispositif (10) d'étalement présentant au moins une partie, dont au moins une partie comprend trois feuilles (12, 14, 16) ou plus, où lesdites feuilles en utilisation sont disposées de sorte qu'une première feuille (16) est disposée principalement dans la direction de déplacement prévue du dispositif d'étalement, et une feuille la plus arrière est disposée tout en arrière par rapport à la direction de déplacement prévue, où les trois feuilles ou plus comprennent au moins une feuille stationnaire et au moins une feuille avec des sections mobiles, et où une ou plusieurs feuilles présentant une ou plusieurs sections (30) mobiles sont disposées sur un ou les deux côtés d'une feuille stationnaire, où chaque feuille présente une surface avant et une surface arrière, lesdites surfaces étant chacune délimitée par deux bords et deux délimitations latérales, étant en utilisation des bords avant et arrière (des bords d'attaque ou de fuite), des limites latérales inférieures et supérieures où lesdites limites latérales supérieures et inférieurs des trois feuilles ou plus sont reliées à des cadres supérieurs et inférieurs respectifs, où au moins une feuille est stationnaire et où une ou plusieurs sections d'une feuille sont reliées de manière pivotante à ladite feuille comprenant une ou plusieurs sections, de sorte que les une ou plusieurs sections peuvent être déplacées d'une position où la surface de toute section affleure la surface de ladite feuille comprenant des sections, à une position où la surface est hors du plan de la surface de ladite feuille comprenant des sections, ledit dispositif d'étalement étant **caractérisé en ce qu'**un axe est défini comme passant à travers le bord d'attaque de la première feuille et le bord de fuite de la feuille la plus arrière, et où la première feuille chevauche ou au moins chevauche une partie de toutes les autres feuilles le long de l'axe, et où une seconde feuille chevauche la feuille la plus arrière le long de l'axe, où le chevauchement de la première feuille par rapport à la seconde feuille est entre 50 % et 90 % mesuré le long de l'axe et où le chevauchement de la seconde feuille par rapport à la feuille la plus arrière est entre 30 % et 90 % mesuré le long de l'axe.

2. Dispositif d'étalement selon la revendication 1, dans lequel les une ou plusieurs sections (30) sont reliées de manière pivotante à ladite feuille comprenant des sections le long du bord avant, du bord arrière ou d'un axe de pivotement disposé entre lesdits bords avant et arrière.

3. Dispositif d'étalement selon la revendication 1 dans lequel les une ou plusieurs sections (30) sont pivotantes hors du plan de la seconde feuille à un degré tel que la section ou les sections entrent en contact avec une feuille adjacente ou toute déviation entre elles.

4. Dispositif d'étalement selon la revendication 1 dans lequel le dispositif d'étalement comprend trois feuilles ou plus et où des feuilles présentant une ou plusieurs sections mobiles sont disposées de part et d'autre d'une feuille stationnaire.

5. Dispositif d'étalement selon la revendication 1 dans lequel une ou plusieurs sections peuvent être pivotées soit au-dessus soit au-dessous de ladite surface supérieure de ladite feuille comprenant des sections, soit à la fois au-dessus et au-dessous de ladite surface supérieure de ladite feuille comprenant des sections.

6. Dispositif d'étalement selon la revendication 1, dans lequel la section représente entre 20 % et 80 %, de préférence entre 30 % et 60 %, et de manière préférée entre toutes environ 40 % de la surface de ladite feuille.

7. Dispositif d'étalement selon la revendication 1 dans lequel le mouvement de pivotement des une ou plusieurs sections est commandé par :
a. le positionnement et le verrouillage manuel de ladite section dans une position souhaitée par rapport à la surface supérieure de ladite feuille comprenant des sections avant l'introduction du dispositif d'étalement dans l'eau, ou
b. l'activation d'un actionneur disposé entre la section et une feuille adjacente, ou
c. la commande à distance d'un actionneur disposé entre la section et une feuille adjacente.

8. Dispositif d'étalement selon une quelconque revendication précédente où le dispositif d'étalement comprend plus d'une partie, où deux parties adjacentes sont reliées par une délimitation latérale commune, et où les parties peuvent éventuellement être inclinées l'une par rapport à l'autre.

9. Dispositif d'étalement selon la revendication 1 dans lequel les une ou plusieurs sections sont positionnées sur une feuille de sorte que la section puisse être déplacée d'une position où la section est sensiblement affleurante, c'est-à-dire qu'elle ne s'étend que d'une épaisseur de matériau de la section mobile du plan de la feuille à une position hors du plan de ladite feuille.
